(19) Europäisches Patentamt
European Patent Office
Office européen des brevets

(11) Veröffentlichungsnummer: **0 194 361**
**B1**

(12) # EUROPÄISCHE PATENTSCHRIFT

(45) Veröffentlichungstag der Patentschrift: **16.03.88**

(51) Int. Cl.⁴: **C 09 K 3/10**, C 08 L 81/04, C 08 G 75/14

(21) Anmeldenummer: **85202042.9**

(22) Anmeldetag: **10.12.85**

(54) **Hitzehärtende Klebe- und Dichtungsmassen, Verfahren zu ihrer Herstellung und Verwendung.**

(30) Priorität: **14.03.85 DE 3509175**

(43) Veröffentlichungstag der Anmeldung: **17.09.86 Patentblatt 86/38**

(45) Bekanntmachung des Hinweises auf die Patenterteilung: **16.03.88 Patentblatt 88/11**

(84) Benannte Vertragsstaaten: **BE CH DE FR IT LI NL**

(56) Entgegenhaltungen:
**EP-A-0 153 442**
**FR-A-73 530**
**FR-A-2 348 247**

(73) Patentinhaber: **Rütgerswerke Aktiengesellschaft, Mainzer Landstrasse 217, D-6000 Frankfurt am Main 1 (DE)**

(72) Erfinder: **Bergmann, Franz-Josef, Dr., Südring 63, D-6941 Laudenbach (DE)**
Erfinder: **Hockenberger, Lothar, Dr., Brahmsstrasse 13, D-6700 Ludwigshafen (DE)**
Erfinder: **Endruscheit, Peter, Kohlklinge 11, D-6940 Weinheim (DE)**
Erfinder: **Paehler, Ralf, Kropsburgring 48, D-6701 Dannstadt-Schauernheim (DE)**

**EP 0 194 361 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Hitzehärtende Klebe- und Dichtungsmassen, Verfahren zu ihrer Herstellung und Verwendung

Die Erfindung betrifft hitzehärtende Klebe- und Dichtungsmassen auf der Basis von merkaptoendständigen Polymeren und/oder Oligomeren.

Derartige Massen, die bei Raumtemperatur spritzfähig sind und zu einem gummielastischen Produkt härten, spielen eine große Rolle bei technischen Abdichtungen und Verklebungen, bei denen die Klebe- oder Dichtstelle elastisch sein muß.

Merkaptoendständige Polymere und Oligomere, insbesondere merkaptoendständige Polysulfidpolymere und -oligomere sind aufgrund ihrer großen Elastizität, ihrer ausgezeichneten Alterungs- und Chemikalienbeständigkeit und wegen ihrer besonders niedrigen Dampfdurchlässigkeiten für viele derartige technische Abdichtungen und Verklebungen besonders geeignet. Beispiele für derartige Anwendungen sind Abdichtungen zwischen nicht starr miteinander verbundenen Funktionsteilen, Verklebungen von Isolierglasscheiben, von Front- und Heckscheiben in Autokarosserien oder von schwer verklebbaren Folien und Profilen auf Metalle.

Bisher wurden diese Klebe- und Dichtungsmassen vorwiegend als sog. Zweikomponentensysteme eingesetzt, bei denen die den Härter und die das Polymer oder Oligomer enthaltenden Komponenten getrennt gelagert und vor Gebrauch miteinander vermischt wurden, oder als feuchtigkeitshärtende Einkomponentensysteme, bei denen das merkaptoendständige Polymer und/oder Oligomer bereits mit einem latenten Härter vermischt vorliegen, der Härter aber erst nach Feuchtigkeitszutritt aktiv wird. Bedingt durch die niedrige Wasserdampfdurchlässigkeit dieser Polymere härten diese Einkomponentensysteme aber für alle die Anwendungsbereiche zu langsam aus, bei denen es auf eine schnelle Verklebung oder eine schnelle elastische Abdichtung ankommt. Dies ist auch bei den Massen nach EP-A-153 442 der fall, die zwar wie im vorliegenden Fall Mangan(IV)-Oxid als Härte enthalten. Dieser hat jedoch nur die Aufgabe als Teilhärter, während das erforderliche Metallperoxid die Endvernetzung bewirkt; dieser Härter wird erst nach Feuchtigkeitszutritt aktiviert und dei Zeiten zur vollständigen Vernetzung bei 23°C und 60 % relativer Luftfeuchte beträgt 6 Wochen.

Eine andere technische Lösung bieten heiß applizierbare Systeme, wie sie aus EP-A-6 698, EP-A-8 845, EP-A-9297 und EP-A-73 530 bekannt sind. Auch hierbei sind Polymer und/oder Oligomer bereits mit einem latenten Härter gemischt, der jedoch erst durch Erhitzen aktiviert wird und zu einer irreversiblen Härtung führt.

Bei all diesen Systemen werden entweder vorvernetzte Massen eingesetzt oder so hochmolekulare Systeme, daß die Massen bei Raumtemperatur nicht applizierbar sind, sondern vor der Applikation aufgeschmolzen und dann heiß extrudiert werden müssen. Dazu müssen diese Massen entweder als festes Band vorfabriziert werden, was sehr aufwendig ist, oder sie müssen in einem Vorratsbehälter aufgeschmolzen werden. Dies führt, da die Härtung aus dem aufgeschmolzenen Zustand irreversibel ist, bei Unterbrechungen der Application zu Verstopfungen der Leitungssysteme.

Wünschenswert wäre daher eine hitzehärtbare Masse, die bei Raumtemperatur pump- und spritzfähig ist. Zwar sind theoretisch Härtersysteme für merkaptoendständige Polymere und Oligomere mit Zinkoxid, Zinkperoxid, p-Chinondioxin als Härterkomponente auch geeignet, bei Raumtemperatur pump- und spritzfähige Massen auszuhärten. Jedoch dauert dabei die Reaktionszeit für eine technische Anwendung zu lange. So haben bei Raumtemperatur pump- und spritzfähige Dichtungsmassen mit Zinkperoxid oder p-Chinondioxin als Härter bei 150 bis 160°C eine Aushärtungszeit von mehr als 60 min. Um diese lange Aufheizzeit abzukürzen, wählte man den oben geschilderten Weg über die sogenannten Hotmelt-Massen.

Eine Verkürzung der Aushärtungszeit durch Erhöhung der Aushärtungstemperatur ist nicht möglich, da sich in diesen Rezepturen dann die Polymere zersetzen. Es ist zwar aus EP-A-9 297 bekannt, ein entsprechendes vorvernetztes Band mittels einer etwa 210°C heißen Extrusionspistole zu erwärmen, jedoch erwärmt sich dabei die Masse nicht auf 210°C, sondern auch lediglich auf etwa 150°C, und zudem währt diese Hitzeeinwirkung nur so kurze Zeit, daß die thermische Zersetzung des Polymers vernachlässigt werden kann.

Bei länger andauernder Wärmeeinwirkung ist die Aufheiztemperatur nach oben eng begrenzt. Dadurch ist es nicht möglich, die Härtungsgeschwindigkeit durch weitere Temperaturerhöhung zu steigern, da dann ein thermischer Abbau des Polymergerüsts erfolgt. Die resultierenden Massen verlieren dann, je nach Grad des thermischen Abbaus, ihre Elastizität. Sie werden weich, plastisch und können ihrer Funktion als Klebeund Dichtungsmassen nicht mehr gerecht werden.

Es war daher Aufgabe der Erfindung, lagerstabile Klebe- und Dichtungsmassen auf der Basis von merkaptoendständigen Polymeren und Oligomeren bereitzustellen, die bei Raumtemperatur pump- und spritzfähig sind und die bei Wärmeeinwirkung eine schnellere Härtung ermöglichen, als dies bei den bisher bekannten Systemen dieser Art der Fall ist. Dabei soll die schnellere Härtung durch eine Erhöhung der Härtungstemperatur bedingt erzielt werden können. Dazu ist aber erforderlich, daß die erfindungsgemäß bereitgestellen Klebe- und Dichtungsmassen thermisch stabiler sind und eine höhere thermische Belastbarkeit zeigen als die bislang bekannten hitzehärtbaren Systeme dieser Art.

Diese Aufgabe wird gelöst durch hitzehärtende Klebe-und Dichtungsmassen gemäß Anspruch 1 sowie Verfahren zu ihrer Herstellung und Verwendung gemäß der Ansprüche 2-3.

Die erfindungsgemäßen hitzehärtbaren Klebe- und Dichtungsmassen entsprechen in ihrer Grundkonzeption den feuchtigkeitshärtenden Einkomponentenmassen mit Mangan(IV)-oxid als Härterkomponente. Ihre Rezeptierung ist aber insofern unterschiedlich zu der bekannter Einkomponentensysteme, als die Auswahl der

Füll- und Zusatzstoffe mit Ausnahme von Verzögerungsmitteln auf basische Stoffe beschränkt sein muß.

Dies ist insofern für den Fachmann ungewöhnlich, als die Auswahl der Füllstoffe für derartige Massen normalerweise dahingehend erfolgt, daß sie sich in ihren Eigenschaften, sei es in ihrer Verstärkungswirkung, ihrem Gleitverhalten, ihrer Wasseraufnahme und auch in ihrer Alkalität bzw. Azidität gegenseitig ergänzen und ausgleichen. So werden, um optimale Eigenschaften zu erzielen, normalerweise basische mit sauren Füllstoffen kombiniert eingesetzt. Dabei sind die sauren Füllstoffe nicht nur für die Optimierung der Verstärkungseigenschaft notwendig, sondern insbesondere für die Thixotropie der Massen. Von Dichtungsmassen wird eine bestimmte Standfestigkeit im unausgehärteten Zustand erwartet, die außer durch Verwendung möglichst feinteiliger Füllstoffe noch durch den Zusatz von Thixotropiermitteln erzielt wird. Für die Wirksamkeit dieser Thixotropiermittel sind normalerweise saure Füllstoffe notwendig, insbesondere dann, wenn die Massen wasserfrei sind.

Die Verwendung von Mangan(IV)-oxid zur Herstellung von feuchtigkeitshärtenden Einkomponentenmassen auf Basis von Polysulfid-Polymere ist auch aus DE-OS-25 57 088 bekannt.

Es ist nicht bekannt, daß sich derartige Einkomponentenmassen durch Wärmeeinwirkung härten lassen. Dies ist insofern überraschend, als sich feuchtigkeitshärtende Einkomponentenmassen auf Basis von Polysulfid-Polymeren oder Oligomeren und anderen Härtungsmitteln wie Calcium- oder Strontiumperoxid, Chromat oder Kaliumpermanganat nicht durch Wärmeeinwirkung härten lassen. Nach Ansicht des Fachmanns ist auch zur oxidativen Härtung in der Wärme Wasser notwendig.

Es ist ebenfalls neu und überraschend, daß sich nicht alle Einkomponentenmassen auf Basis von Polysulfid-Polymeren oder -Oligomeren und Mangan(IV)-oxid als Härter zur Härtung durch Wärmeeinwirkung eignen, sondern daß es hierbei sehr stark auf die Rezeptierung dieser Massen, d.h. auf die Füll- und Zusatzstoffe ankommt und daß sich insbesondere die Massen gut eignen, die eine Zusammensetzung haben, die der Fachmann als ungünstig klassifizieren und damit verwerfen würde.

Für die erfindungsgemäße hitzehärtenden Klebe- und Dichtungsmassen sind alle flüssigen Polymere oder Oligomere oder Mischungen von monomeren, oligomeren und polymeren Verbindungen mit endständigen Mercaptogruppen verwendbar, wie z. B. Polysulfidpolymere, polymere Thioäther u. dgl. Als Beispiel für eine monomere Verbindung mit nur einer SH-Gruppe sei 2-Mercapto-äthanol erwähnt, das man als sog. Kettenstopper oft den Polymeren zusetzt, um eine größere Flexibilität des gehärteten Endprodukts zu erzielen.

Die bevorzugten flüssigen merkaptoendständigen Verbindungen sind Polysulfid-Polymere und -Oligomere der allgemeinen Formel $HS-(RSS)_n-RSH$, wobei n im Bereich von 5 bis 25 liegt und R einen Alkyl-, Alkyläther oder Alkylthioätherrest darstellt. Der bevorzugte Rest R ist ein Bis-ethyl-formal-Rest der Formel

$-C_2H_4-O-CH_2-O-C_2H_4$.

Das Molekulargewicht dieser Verbindungen liegt, abhängig von der Zahl n und der Größe des Restes R im Bereich von 500 bis 8000. Diese Polysulfid-Verbindungen haben bei Raumtemperatur eine Viskosität von 0,5 bis 80 Pa's.

Als Mangan(IV)-oxid werden bevorzugt solche Typen eingesetzt, die als Härter für Polysulfidpolymere im Handel sind. Es handelt sich dabei meist um gamma- oder delta- Mangan(IV)-oxid, das zudem, je nach Hersteller, durch Dosierung mit Fremdionen weiter aktiviert wurde. Dieses Mangan(IV)-oxid kann bis zu 8 Gew.-% Wasser enthalten. Es ist wichtig, daß dieser Wassergehalt auf weniger als 0,1 Gew.-% reduziert wird, bevor das Mangan(IV)-oxid mit weiteren Bestandteilen der Masse vermischt wird.

Die verwendete Menge an Mangan(IV)-oxid muß so bemessen sein, daß alle Merkaptogruppen oxidativ zu Disulfidbrücken vernetzt werden können. Zweckmäßigerweise wird die 2- bis 3-fache der stöchiometrisch notwendigen Menge eingesetzt.

Als Füll- und Zusatzstoffe lassen mit Ausnahme von Verzögerungsmitteln lassen sich erfindungsgemäß nur solche einsetzen, die neutral oder basisch sind. Als Maß für diese Acidität bzw. Alkalität dient der pH-Wert einer 10 %-igen wäßrigen Lösung oder Aufschlämmung bei Füll- und festen Zusatzstoffen oder der pH-Wert einer wäßrigen Lösung oder Extratkion bei flüssigen Zusatzstoffen. Ist der pH-Wert einer derartigen Lösung oder Aufschlämmung oder eines derartigen Extraktes größer oder gleich 7, so ist der geprüfte Füll- oder Zusatzstoff einsetzbar. Einzige Ausnahme bilden die in geringen Mengen eingesetzten Verzögerer, wie z. B. Öl-, Stearin- oder Benzoesäure oder Malein- oder Phthalsäureanhydrid.

Beispiele für verwendbare Füllstoffe sind Kreiden, alkalische Ruße, Dolomit, Titandioxid, Zinksulfid, Schwerspat, Cellulose- oder Polyamidpulver. Beispiele für verwendbare feste Zusatzstoffe sind Erdalkalioxide oder -hydroxide, Molekularsiebpulver, Schwefelblüte, Bentonite sowie ggf. Pigmente, Reaktionsbeschleuniger oder Stabilisatoren. Beispiele für flüssige Zusatzstoffe sind Lösemittel, Weichmacher, wie z. B. Phthalate, Benzoesäureester, hydrierte Terphenyle oder hochsiedende Polyäther, Haftmittel oder flüssige Stabilisatoren, Trocknungs- oder Antiabsetzmittel.

Die Herstellung der Massen erfolgt in der Art, daß zumindest zwei verschiedene Teile getrennt angesetzt und zum Schluß miteinander vermischt werden. In der Regel wird das merkaptoendständige Polymer und/oder Oligomer mit Weichmacher, Füllstoffen, Trockenmittel, Pigment, Thixotropier- und Verzögerungsmittel sowie ggf. mit Lösemittel, Haft- und Beschleunigungsmittel intensiv unter Luftabschluß, bevorzugt unter Vakuum gemischt.

Dazu müssen alle eingesetzten Stoffe trocken sein. Da anorganische Füllstoffe, viele Weichmacher sowie ebenfalls die merkaptoendständigen Polymere oder Oligomere immer Spuren von Wasser enthalten, ist der Einsatz von absolut wasserfreien Produkten unter den Bedingungen einer industriellen Fertigung nicht möglich. Die Mischung darf aber nur einem Wassergehalt von maximal 0,1 Gew.-% enthalten.

Dies wird erreicht, teils indem vorgetrocknete Einsatzstoffe verwendet werden, mit einem Wassergehalt von etwa 0,1 Gew.-%, teils indem die Herstellung dieser Mischung durch Rühren unter Vakuum erfolgt, wobei ggf. das Entfernen des Wassers durch vorherige Zugabe von azeotrop destillierenden Lösemitteln wie z. B. Toluol erleichtert wird.

Da zudem die Mischungen noch Trocknungsmittel enthalten, die mit Wasser chemisch reagieren, wie z. B. Erdalkalioxide oder die Wasser stark absorbieren, wie z. B. Molekularsiebpulver, liegt der Wassergehalt der lagerfähigen Mischungen meist unter 0,05 Gew.-%.

Parallel dazu wird das in Trockenöfen bei 105 - 120°C oder unter Vakuum getrocknete Mangan(IV)-oxid mit Trockenmittel versetzt, mit Weichmacher angepastet und intensiv gemischt. Diese Mangan(IV)-oxid-Paste wird mit der das merkaptoendständige Polymer oder Oligomer enthaltenden Mischung zusammengebracht und unter Vakuum innig vermischt.

Als Mischgeräte hierzu eignen sich hochtourige Ankerrührer, Planetenmischer oder Dissolver, die unter Vakuum betrieben werden können. Die hergestellten Massen sind bei trockener Lagerung bei Temperaturen bis 50°C monatelang lagerfähig. Sie sind bei Raumtemperatur pump- und spritzfähig. Bei Feuchtigkeitszutritt härten sie innerhalb weniger Tage, wobei sich zuerst eine dünne klebfreie Haut bildet, die sich bis zur Durchhärtung verdickt. Beim Erhitzen erfolgt eine gleichmäßige Durchhärtung der ganzen Masse.

Diese Hitzehärtung setzt bei etwa 100°C ein mit Härtungszeiten von etwa 60 min. Bei steigender Temperatur verkürzt sich die Härtungszeit auf etwa 5 min bei 230°C Ofentemperatur.

Die Erhitzung der Masse kann durch Erwärmen in einem Ofen, durch kurzzeitigen Kontakt mit heißen Flächen oder durch Bestrahlen mit Infrarot oder Mikrowellen erfolgen. Letzteres hat den Vorteil der gleichmäßigen Aufheizung der Masse. Es ist dabei nicht notwendig, die Masse während der ganzen Härtungszeit zu erhitzen. Vielmehr genügt es, die Masse kurzzeitig auf eine Temperatur von 170 bis 200°C zu erhitzen. Während der Abkühlphase, die durch die freiwerdende Reaktionswärme verlängert wird, härtet die Masse durch. Diese Art der Aushärtung wird erst durch den weiteren unerwarteten Vorteil der erfindungsgemäßen Massen bedingt, daß sie thermisch sehr stabil sind, sodaß sie sich auf entsprechende Temperaturen erhitzen lassen, ohne daß Zersetzungsreaktionen nachweislich stören. Dadurch wird es ermöglicht, daß diese Massen als bei Raumtemperatur pumpbare, heiß applizierbare Klebe- und Dichtungsmassen verwendet werden können.

**Beispiele**

Das in Beispiel 2 und den Vergleichsbeispielen verwendete Polymer ist ein Polysulfid-Polymer der durchschnittlichen Struktur

$HS-(C_2H_4-O-Ch_2-OC_2H_4-SS)_{23}-C_2H_4-O-CH_2-O-C_2H_4SH$

mit etwa 0,5 % Quervernetzung. Es hat ein mittleres Molekulargewicht von 4000 und eine Viskosittät bei 27°C von 35-45 Pa's. Alle Mengenangaben beziehen sich auf Gewichtsteile oder Gewichtsprozente.

**Beispiel 1**

Technisches Mangan(IV)-oxid für die Härtung flüssiger Polysulfide wird bei 110°C 24 h getrocknet.

In einer Kugelmühle wird eine Härtermischung aus
60 Teilen trockenem Mangan(IV)-oxid
90 Teilen Benzylbutylphthalat
5 Teilen Bariumoxidpulver
15 Teilen Molekularsiebpulver 3 A
angepastet.

Die Paste hat einen Wassergehalt von 0,02 Gew.-%.

**Beispiel 2**

Eine Grundmischung aus
1000 Teilen Polymer
370 Teilen Benzylbutylphthalat
800 Teilen Kreide
100 Teilen SRP-Ruß (pH 8)
250 Teilen Titandioxid
5 Teilen Stearinsäure

25 Teilen Molekularsiebpulver 3 A
25 Teilen Bentonit (Bentone SD-2)
5 Teilen Bariumoxidpulver

wird im Planetenmischer 40 min unter Vakuum (600 pascal) intensiv gerührt.

Die homogene Mischung hat einen Wassergehalt von 0,09 %.

Zu dieser Mischung werden 170 Teile der Härtermischung aus Beispiel 1 gegeben und unter Vakuum 10 min lang intensiv gemischt.

Die erhaltene Masse wird in mehrere Portionen geteilt, mit denen folgende Versuche durchgeführt werden:

a. Ein Teil wird in einer Tube verschlossen bei 23°C gelagert. Die Masse ist noch nach einer Lagerzeit von 6 Mon. spritzbar.

b. Ein Teil wird zu einem Probekörper (15x15x50 mm) ausgespritzt und bei 23°C und 50 % relativer Feuchte offen gelagert.

Die Masse hat nach 30 min eine dünne klebfreie Haut. Die Haut ist nach 1 d 3 mm stark. Nach 10 d ist die Probe zu einem gummielastischen Körper durchgehärtet.

c. Jeweils 50 g der Masse werden in einem Umluftofen gelagert.

Bei den in Tabelle 1 aufgeführten Ofentemperaturen werden die entsprechenden Aushärtungszeiten und die zum Zeitpunkt der Aushärtung in der Masse erreichten Temperaturen gemessen:

| Temperatur/Ofen (°C) | Temperatur/Masse (°C) | Härtungszeit (min) |
|---|---|---|
| 130 | 130 | 55 |
| 140 | 140 | 45 |
| 150 | 150 | 30 |
| 160 | 155 | 23 |
| 170 | 162 | 18 |
| 180 | 167 | 12 |
| 190 | 175 | 10 |
| 200 | 174 | 8 |
| 210 | 174 | 6 |
| 230 | 173 | 5 |

d. 50 g der Masse werden in einem Mikrowellenherd 60 s lang mit stärkster Intensität aufgeheizt. Die Temperatur der Probe beträgt danach gleichmäßig 175°C. Nach dem Abkühlen ist die Probe zu einem gummielastischen Körper durchgehärtet.

e. Ein Teil der Masse wird mittels einer Hot-melt-Pistole ausgespritzt, wobei die Masse in der Pistole kurzzeitig auf 180°C erhitzt wird. Nach dem Abkühlen des ausgespritzten Stranges ist dieser durchgehärtet.

**Beispiel 3**

Analog zu Beispiel 2 wird eine Grundmischung hergestellt, wobei die verwendete merkaptoendständige Verbindung ein oligomeres Polysulfid der durchschnittlichen Struktur

$HS\text{-}(C_2H_4\text{-}O\text{-}CH_2\text{-}O\text{-}C_2H_4\text{-}SS)_8\text{-}C_2H_4\text{-}O\text{-}CH_2\text{-}O\text{-}C_2H_2\text{-}SH$

mit etwa 2 % Quervernetzung ist. Es hat ein durchschnittliches Molekulargewicht von 1000 und eine Viskosität bei 27°C von 0,7 - 1,2 Pa·s.

Zu der Grundmischung werden 680 Teile der Härtermischung gemäß Beispiel 1 gegeben und unter Vakuum 10 min lang intensiv gemischt.

Die erhaltene Masse wird in mehrere Portionen geteilt, mit denen folgende Versuche durchgeführt werden:

a. Ein Teil wird in einer Tube verschlossen bei 23°C gelagert. Die Masse ist noch nach einer Lagerzeit von 6 Mon. spritzbar.

b. Ein Teil wird zu einem Probekörper (15x15x50 mm) ausgespritzt und bei 23°C und 50 % relativer Feuchte offen gelagert. Die Masse hat nach 30 min. eine dünne klebfreie Haut. Nach 10 d ist die Probe zu einem gummielastischen Körper durchgehärtet.

c. 50 g der Masse werden in einem Umluftofen bei 160°C gelagert. Nach 20 min ist die Masse zu einem gummielastischen Produkt durchgehärtet.

**Beispiel 4**

Analog zu Beispiel 2 wird eine Grundmischung hergestellt, wobei die verwendete merkaptoendständige Verbindung ein Polymercaptan der durchschnittlichen Struktur

$$R\left[O(C_3HO)_{20-25}CH_2-\underset{OH}{\underset{|}{CH}}-CH_2SH\right]_{2-3}$$

ist, wobei R einen aliphatischen Rest bedeutet. Das Polymer hat ein durchschnittliches Molekulargewicht von 6000 und eine Viskosität bei 25°C von 6 Pa·s.

Zu dieser Mischung werden 250 Teile der Härtermischung aus Beispiel 1 gegeben und unter Vakuum 10 min lang intensiv gemischt.

Die erhaltene Masse wird in mehrere Portionen geteilt, mit denen folgende Versuche durchgeführt werden:

a. Ein Teil wird in einer Tube verschlossen bei 23°C gelagert. Die Masse ist noch nach einer Lagerzeit von 4 Mon. spritzbar.

b. Ein Teil wird zu einem Probekörper (15x15x50 mm) ausgespritzt und bei 23°C und 50 % relativer Feuchte offen gelagert.

Die Masse hat nach 20 min eine dünne klebfreie Haut. Nach 10 d ist die Probe zu einem gummielastischen Körper durchgehärtet.

c. 50 g der Masse werden in einem Umluftofen bei 160°C gelagert. Nach 25 min ist die Masse zu einem gummielastischen Produkt durchgehärtet.

**Vergleichsbeispiel 1**

Eine Grundmischung aus

1000 Teilen Polysulfid-Polymer
270 Teilen Benzylbutylphthalat
100 Teilen Chlorparaffin (56 % Chlor)
600 Teilen Kreide
300 Teilen Calcinierter Ton
250 Teilen Titandioxid
5 Teilen SRP-Ruß (pH 8)
5 Teilen Stearinsäure
25 Teilen Hochdisperse Kieselsäure
25 Teilen Molekularsiebpulver 3A

wird analog zu Beispiel 2 hergestellt und mit 170 Teilen der Härtermischung aus Beispiel 1 unter Vakuum intensiv gemischt.

Die erhaltene Masse wird in mehrere Portionen geteilt, mit denen folgende Versuche durchgeführt werden:

a. Ein Teil wird in einer Tube verschlossen bei 23°C gelagert. Die Masse ist noch nach einer Lagerzeit von 6 Mon. spritzbar.

b. Ein Teil wird zu einem Probekörper (15x15x50 mm) ausgespritzt und bei 23 °C und 50 % relativer Feuchte offen gelagert.

Die Masse hat nach 1 h eine dünne klebfreie Haut. Nach 14 d ist die Probe zu einem gummielastischen Körper durchgehärtet.

c. 50 g der Masse werden in einem Umluftofen bei 160°C gelagert. Nach 60 min ist noch keine Härtung zu beobachten.

**Vergleichsbeispiele 2 bis 6**

Jeweils 50 g verschiedener Einkomponentenmassen auf Basis von Polysulfidpolymer werden in einem Umluftofen bei 160°C 60 min lang gelagert. Dabei werden folgende Ergebnisse erhalten:

| | Masse | Ergebnis |
|---|---|---|
| a. | handelsübliche Einkomponentenmasse mit $CaO_2$ als Härter | keine Härtung |
| b. | handelsübliche Einkomponentenmasse mit $ZnO_2$ als Härter | leichte Anhärtung Oberfläche durch Zersetzungsprodukte klebrig |
| c. | Einkomponentenmasse gemäß Beispiel 3 der DE-PS 26 15 963 | keine Härtung |
| d. | Einkomponentenmasse gemäß Beispiel 2 der DE-OS 25 57 088 | keine Härtung |
| e. | Einkomponentenmasse gemäß Beispiel 1 der DE-PS 23 63 856 | keine Härtung |

**Patentansprüche**

1. Hitzehärtende Klebe- und Dichtungsmassen auf der Basis von flüssigen merkaptoendständigen Polymeren und/oder Oligomeren unter Mitverwendung von Härtungsmitteln, Füllstoffen, Weichmachern, Trockenmitteln und gegebenenfalls Löse- mitteln, Haftvermittlern, Pigmenten, Stabilisatoren, Beschleunigern, Thixotropier- und Verzögerungsmitteln, dadurch gekennzeichnet, daß die Massen wasserfrei sind, als Härtungsmittel Mangan(IV)-oxid und als Füll- und Zusatzstoffe mit Ausnahme der Verzögerungsmittel nur solche enthalten, deren wäßrige Aufschlämmung oder wäßriger Extrakt neutral oder alkalisch ist.

2. Verfahren zur Herstellung von Massen gemäß Anspruch 1, dadurch gekennzeichnet, daß flüssigen merkaptoendständige Polymere und/oder Oligomere, Füllstoffe, Weichmacher, Trockenmittel und gegebenenfalls Lösemittel, Haftvermittler, Pigmenten, Stabilisatoren, Beschleunigern, Thixotropier- und Verzögerungsmittel unter Vakuum intensiv miteinander vermischt und dabei getrocknet werden, daß der Wassergehalt der Mischung unter 0,1 Gew.-% liegt, daß unabhängig davon Mangan(IV)-oxid auf einen Wassergehalt von weniger als 0,05 Gew.-% vorgetrocknet, gemeinsam mit Trockenmittel mit Weichmacher angepastet wird und daß diese Paste mit der das Polymer und/oder Oligomer enthaltenden Mischung unter Vakuum miteinander vermischt werden.

3. Verwendung der Massen gemäß Anspruch 1 als heiß applizierbare Klebe- und Dichtungsmassen.

**Claims**

1. Heat curable adhesion and sealing compounds based on liquid mercapto terminated polymers and/or oligomers together with curing agents, fillers, plasticizers, drying agents and if necessary solvents, adhesion promotors, pigments, stabilizers, accelerators, thixotroping or retarding agents, charcterized in that the compounds are free of water, contains as curing agent manganese dioxide and as fillers and additives except the retarding agents only products of which the aqueous suspension or extract is neutral or alkaline.

2. A process for the preparation of compounds of claim 1 wherein the liquid mercapto terminated polymers and/or oligomers, fillers, plasticizers, drying agent and if necessary solvents, adhesion promotors, pigments, stabilizer, accelerators, thixotroping and retarding agents are mixed intensively under vacuum and dried thereby, that the water content of the mixture is below 0.1 % by weight, that independently therefrom the manganese dioxide is predried to a water content of less than 0.05 % by weight and is mixed with a drying agent and a plasticizer to a paste and that this paste is mixed under vacuum with the mixture containing the polymer and/or the oligomer.

3. Use of the compounds of claim 1 as hot applicable adhesion and sealing compound.

**Revendications**

1. Masses d'adhérence et d'étanchéité thermodurissables à base de polymères et/ou d'oligomères liquides comportant des radicaux mercapto en position terminale avec utilisation conjointe de durcisseurs, de matières de charge, de plastifiants, d'agents de déshydratation et le cas échéant, de solvants, d'agents conférant

l'adhésivité, de pigments, de stabilisants, d'accélérateurs, d'agents de thixotropie et de retard, caractérisées en ce que les masses sont anhydres, en ce qu'en tant que durcisseurs elles contiennent de l'oxyde de manganése(IV) et qu'en tant que matières de charge et additifs, à l'exception des agents retard, elles ne contiennent que des matières dont la suspension aqueuse ou l'extrait aqueux est neutre ou alcalin.

2. Procédé pour la préparation de masses selon la revendication 1, caractérisé en ce que des polymères et/ou oligomères liquides comportant des radicaux mercapto en position terminale, des matières de charge, des plastifiants, des agents de déshydratation et le cas échéant des solvants, des agents conférant l'adhésivite, des pigments, des stabilisants, des accélérateurs, des agents de thixotropie et de retard sont mélangés intensivement sous vide les uns avec les autres et séchés cette occasion, en ce que la teneur en eau du melange se situe au-dessous de 0,1 % en poids, en ce qu'indépendamment de cela, de l'oxyde de manganèse(IV) préséché jusqu'à une teneur en eau inférieure à 0,05 % en poids, est mis sous forme de pâte conjointement avec l'agent de déshydratation et le plastifiant et en ce que cette pâte est mélangée sous vide avec le mélange contenant le polymère et/ou l'oligomère.

3. Utilisation des masses selon la revendication 1 en tant que masses d'adherence et d'étanchéité applicables à chaud.